Europäisches Patentamt

European Patent Office

Office européen des brevets

(19)

(11) **EP 1 059 784 A1**

(12) **EUROPEAN PATENT APPLICATION**

(43) Date of publication:
**13.12.2000 Bulletin 2000/50**

(51) Int Cl.7: **H04L 25/02**, G06F 17/16

(21) Application number: **99304585.5**

(22) Date of filing: **11.06.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Ilas, Constantin**
  **Swindon, Wiltshire SN5 9RP (GB)**
• **Karimi, Hamid Reza**
  **Swindon, Wiltshire SN5 5BJ (GB)**
• **WU,Jian Jun**
  **Lower Earley, Reading RG6 3AB (GB)**
• **Sandell, Magnus**
  **Swindon, Wiltshire SN1 3PN (GB)**

(74) Representative: **Williams, David John et al**
**Lucent Technologies UK Limited,**
**5 Mornington Road**
**Woodford Green, Essex IG8 0TU (GB)**

(54) **Matrix manipulation for channel estimation**

(57)    There is disclosed a method of approximating the result of the multiplication of a truncated convolution matrix by its transpose. The method comprises determining at least one value in each diagonal of the matrix and setting all values in each diagonal in dependence on the at least one value to thereby create an approximated matrix product.

## FIG. 2

RECEIVED SIGNAL — 2 — CHANNEL ESTIMATOR — 4 — 5 — TRAINING SEQUENCE — 14 — EQUALISER — 6 — 16 — CHANNEL ESTIMATOR — 8 — 18 — EQUALISER — 10 — 12

EP 1 059 784 A1

## Description

### Field of the Invention

The present invention relates to an improved technique for manipulating a truncated convolution matrix, and particularly but not exclusively to the application of such a technique in the channel estimation stage of a receiver such as a GSM receiver.

### Background to the Invention

In a conventional GSM receiver, a mid-amble segment of a time-slot is used to derive an initial estimate of the radio channel. This is subsequently used in conjunction with an equaliser to derive estimates of all the symbols transmitted in the time-slot. In a more advanced GSM receiver, the initial estimates of all the symbols in the time-slot can be used as a long mid-amble in order to derive a better channel estimate and subsequently better estimates of the symbols in the time-slot. This procedure can be repeated indefinitely, with diminishing returns, to improve the performance of the receiver.

The derivation of the second channel estimate effectively uses the whole time-slot as a long mid-amble and requires the solution of a linear system of equations. Due to the power-ramping action of the mobiles on the uplink, the linear system of equations is not Toeplitz and as a result conventional computationally efficient techniques such as the Levinson-Durbin recursion cannot be deployed.

The Levinson-Durbin recursion for the solution of Toeplitz linear equations is well known. A popular reference for this is the text "Digital Communications" by J.G.Proakis, pp. 879-881, 3rd Edition, McGraw-Hill, 1995.

It is therefore an object of the present invention to provide an improved technique suitable for application in the channel estimation stage of a wireless system.

### Summary of the Invention

According to the present invention there is provided a method of approximating the result of the multiplication of a truncated convolution matrix by its transpose, comprising the steps of: determining at least one value in each diagonal of the matrix; and setting all values in each diagonal in dependence on the at least one value to thereby create an approximated matrix product.

The step of determining at least one value in each diagonal of the matrix may comprise selecting a column of the matrix, and determining the at least one value in each diagonal in dependence on the values in the selected column. The first column of the matrix may be selected.

The step of determining at least one value in each diagonal of the matrix may comprise calculating the average of all values in each diagonal, and setting all values in each diagonal to the respective average value.

The invention also provides a method of determining the least square values of a vector comprising: approximating the result of the multiplication of the truncated convolution matrix by its transpose according to any one of the above defined techniques; and inverting the resultant matrix.

The method may be utilised in a mobile communications system.

The method may further comprise the steps of: correlating a received signal with a predetermined sequence of bits thereby generating a first set of correlation values; generating a first channel estimate in dependence on the first set of correlation values; using the first channel estimate to derive a long sequence of estimated symbols; correlating the received signal with the long sequence of estimated symbols, thereby generating a second set of correlation values, and generating a second channel estimate in dependence on the second set of correlation values, wherein the second set of correlation value is based on a truncated convolution matrix.

The present invention can be used to reduce the computational complexity associated with iterative channel estimation in GSM. The present invention provides a procedure whereby the linear system of equations is approximated by an equivalent Toeplitz system allowing a reduction in computational complexity at the expense of very little degradation in performance.

### Brief Description of the Drawings

    Figure 1 illustrates the sampling of a signal in a GSM burst for channel estimation;
    Figure 2 illustrates an example of a channel estimator;
    Figure 3 illustrates an example implementation of part of the channel estimator of Figure 2.

## Description of Preferred Embodiment

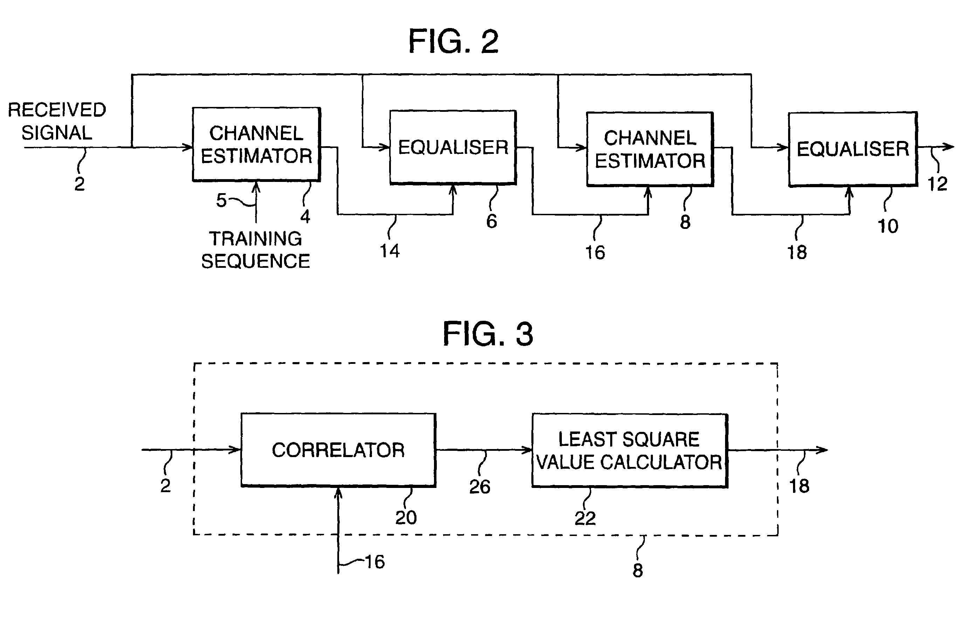

Figure 2 illustrates a block diagram of a known implementation of a channel estimation stage suitable for a receiver in a GSM system. The channel estimation stage inputs the received signal on a line 2, and outputs an estimate of the symbols conveyed by the received signal on line 12.

The received signal on line 2, denoted by the notation r, may be modelled as:

$$\underline{r} = G\,\underline{h} + \underline{e} \qquad\qquad (1)$$

where $\underline{h}$ is the vector channel impulse response, $\underline{e}$ is the vector additive noise, and **G** is an NxW (where N is the number of useful symbols and W is the channel length) truncated convolution matrix of the vector of the transmitted symbols $x_1 \dots x_N$, where it is assumed that each burst includes N symbols. Such a model of the received signal on line 2 is well-known.

In the present example, where it is assumed that the transmitted symbol is a GSM symbol, N=148, the channel length is 5, and the matrix may be represented as:

$$
\mathbf{G} =
\begin{bmatrix}
x_1 & 0 & 0 & 0 & 0 \\
x_2 & x_1 & 0 & 0 & 0 \\
x_3 & x_2 & x_1 & 0 & 0 \\
x_4 & x_3 & x_2 & x_1 & 0 \\
x_5 & x_4 & x_3 & x_2 & x_1 \\
x_6 & x_5 & x_4 & x_3 & x_2 \\
\vdots & \vdots & \vdots & \vdots & \vdots \\
x_{148} & x_{147} & x_{146} & x_{145} & x_{144}
\end{bmatrix}
\qquad (2)
$$

*G* is termed a convolution matrix as a result of the relationship between its columns: the value in each column corresponds to the value in adjacent columns on the same diagonal, and all diagonals above the main diagonal are zero. *G* is a truncated convolution matrix, however, because certain of the columns are truncated. In the given example of GSM, the useful number of symbols is 148. Thus the first column corresponds to a first replica of the signal including 148 symbols $x_1$ to $x_{148}$. The second column corresponds to a second replica of the signal at a given time shift from the first, such that the first value is 0 and the remaining values are $x_1$ to $x_{147}$.

Value $x_{148}$ is not included, and hence the column is truncated. Similarly the third, fourth and fifth columns are truncated by two, three and four values respectively.

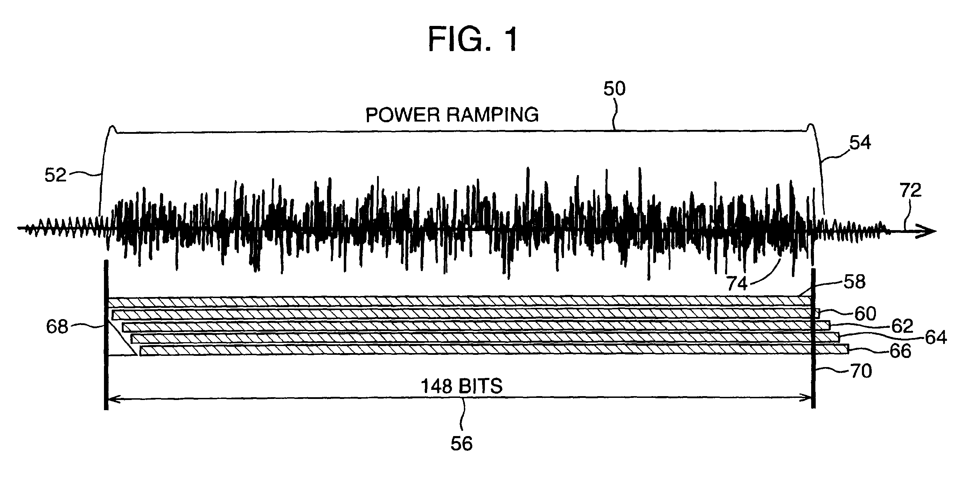

The formation of the matrix *G* is further illustrated with reference to Figure 1. Figure 1 illustrates the format of the template of the power ramping of a GSM burst. The burst has a rising edge 52, a level portion 50, and a falling edge 54. The 148 useful symbols of a GSM burst are contained within the template of the power ramping, as illustrated by the arrow 56. The bar 68 represents the start of the useful data portion in the burst, and the bar 70 represents the end of the useful data portion in the burst. The arrow 72 represents the time axis of the burst, and the transmitted signal is super-imposed on the time axis 72, as generally designated by the reference numeral 74.

A first replica of the burst includes 148 symbols, and is represented in Figure 1 by data block 58, and by the first column in matrix *G*. A second replica of the burst is shifted by one symbol time and includes only 147 symbols, the 148th symbol being discarded because it coincides with the falling edge 54 of the power ramp which contains no useful information.

The second replica is also represented by the second column of the matrix *G*. Similarly a third replica of the burst is represented by data block 62, and the third column of the matrix *G*; a fourth replica of the burst is represented by data block 64, and the fourth column of the matrix *G*; a fifth replica of the burst is represented by data block 66, and the fifth column of the matrix *G*.

In alternative systems a larger number of replicas may be considered, thus expanding the size of the matrix *G*.

The object of channel estimation is to derive an estimate of $\underline{h}$, given the received signal $\underline{r}$ and knowledge of the transmitted symbols, i.e. the matrix *G*. The estimate of the channel is then used to recover the transmitted symbols from the received signal.

The channel estimation stage of Figure 2 includes two channel estimator blocks 4 and 8 and two equaliser blocks 6 and 10. All of the blocks of the channel estimation stage receive as a first input a received signal on line 2. The channel estimator 4 additionally receives as a second input the signal carrying the training sequence for the received signal on line 5. The output of the channel estimator 4 on line 14 forms a second input to the equaliser 6. The output of the equaliser 6 on line 16 forms a second input to the channel estimator 8. The output of the channel estimator 8 on line 18 forms a second input to the equaliser 10. The output of the equaliser 10 on line 12 forms the symbol estimates, and is provided for processing elsewhere in the receiver circuitry.

Each of the channel estimation stages includes a correlator for correlating the received signal. The correlator performs a correlation function on the received signal, given by:

$$G^H \underline{r} = G^H G \underline{h} + G^H \underline{e} \tag{3}$$

$G^H$ represents the hermitian function, or complex transpose, of the training sequence with which the received signal is correlated.

The operation of a channel estimator such as that shown in Figure 2 will be well known to those skilled in the art. A description of the operation of the channel estimator is given hereinbelow so as to understand an implementation of the present invention.

The received signal on line 2 will contain, if it is a GSM signal, a training sequence. The training sequence is a fixed number of symbols, located in the middle of a GSM burst (and therefore known as a "mid-amble training sequence"), which can be used to estimate the timing position of the received signal. The training sequence provided on line 5 corresponds to the expected training sequence for the current burst. This training sequence is correlated, in the channel estimator 4, with the estimated location of the mid-amble training sequence for a number of estimated positions of the mid-amble training sequence. The channel estimator thus performs a number of correlations to generate a correlation function, and the symbol positions and values of those correlation elements having the highest magnitudes are provided on line 14 to the equaliser 6. In GSM, the channel estimator provides to the equaliser 6 the five best correlation values.

The equaliser 6, in accordance with known techniques, equalises the received signal on line 2 based on the five highest correlation values and generates an equalised received signal on line 16.

The channel estimator 4 and equaliser 6 thus perform a first-stage equalisation based on an initial channel estimate $\underline{h}_1$. This results in an estimate $\underline{x}_1$ of the transmitted symbols within the burst. In the first-stage channel estimator 4 the only known transmitted symbols correspond to those of the training sequence, since information regarding the symbols in the remainder of the burst is unavailable. In a GSM burst, the training sequence at this point consists of 16 symbols.

Mathematically, because of the design of the mid-amble, the operation $G^H G$ is an identity matrix, and thus the equation 3 readily results in estimate $\underline{h}_1$ :

$$\underline{h}_1 = G^H \underline{r} = \underline{h} + G^H \underline{e} \tag{4}$$

In some GSM systems the symbol estimates on line 16 are provided to the receiver circuitry for further processing such as decoding. In more advanced receivers, such as that shown in Figure 2, a further estimation and equalisation step takes place. In the channel estimator of Figure 2, the output of the equaliser 6 on line 16 is treated as a long training sequence, and correlated with the received signal on line 2 in the channel estimator 8. Figure 3 shows in more detail the channel estimator 8.

The channel estimator 8 comprises a correlator stage 20 and a least squares value calculator 22. The correlator stage 20 performs the correlation of the output of the equaliser 6 with the received signal on line 2. The output of the correlator 20 on line 26 is provided as an input to the least squares value calculator. Thus the least squares value calculator receives as an input the correlation function at the output of the correlator 20.

The least squares value calculator 22 determines the five highest values of the least squares function, and provides these on line 18 to the equaliser 10. The equaliser 10 then generates a final estimate of the received symbols on line 12, based on the five best values of the least squares function.

Thus a second channel estimation process is realised by treating the estimate $\underline{x}_1$ at the output of the equaliser 6 as a long training sequence.

This results in an improved channel estimate $\underline{h}_2$ from the channel estimator 8 which is then applied to the second stage equaliser 10 and consequently an improved data estimate $\underline{x}_2$ is generated on line 12 from the equaliser 10. For the second-stage channel estimator the output $\underline{x}_1$ of the equaliser 6 is a reasonably good symbol estimate. Therefore estimates of all the symbols in the burst are available from the output of the first equaliser 6 and can be used as a 148-symbol long "training sequence" to obtain improved channel estimates. This procedure is called "Iterative Channel Estimation" (ICE).

Mathematically, in this case the operation $G^H G$ is no longer an identity matrix. In order to solve equation (3) for $\underline{h}$ it is necessary to multiply equation (3) by $[G^H G]^{-1}$, such that equation (3) becomes:

$$\underline{h}_2 = [G^H G]^{-1} G^H \underline{r} = [G^H G]^{-1} G^H G \, \underline{h} + [G^H G]^{-1} G^H \, \underline{e} \qquad (5)$$

which simplifies to:

$$\underline{h}_2 = [G^H G]^{-1} G^H \underline{r} = \underline{h} + [G^H G]^{-1} G^H \, \underline{e} \qquad (6)$$

The channel estimate $\underline{h}_2$ is a least squares estimate. This known technique has been proven to lead to better bit error rates compared to the channel sounding based ICE (i.e. without the inversion $[G^H G]^{-1}$). However a disadvantage is that the complexity of the method is very high, especially because of the need to estimate the inverse of the matrix $V=[G^H G]$. Calculating the inverse of the matrix $[G^H G]$ requires a large number of mathematical operations.

Since $G$ is truncated, the matrix $[G^H G]$ is not Toeplitz, and hence the efficient solution of equation (6) using the Levinson-Durbin recursion is not possible. Equation (6) would then need to be solved using the more computationally expensive Cholesky decomposition.

In accordance with the present invention, a simplified technique for creating a Toeplitz version of the matrix $[G^H G]$ is provided which leads to significant performance enhancements and can be implemented on a fixed point digital signal processor with little computational effort.

The matrix $G$ is, as stated above, derived from the elements of $\underline{x}_1$, and can be represented as the NxW truncated convolution matrix shown generally in equation (2).

As discussed above in relation to equation (2), the N rows of the matrix represent the number of useful symbols, which in a GSM system is 148.

The W columns represents the channel length in symbols. Thus adjacent columns correspond to each other, but are shifted vertically by one position relative to each other. Each column from right to left has one more sample than the previous column, and is shifted upward by one position. The structure of such a truncated convolution matrix implies that the elements on any one diagonal of $[G^H G]$ have very similar, yet strictly distinct, values.

Exploiting this relationship between elements on the diagonals in the correlation matrix $[G^H G]$, however, an approximation of the matrix can be reached by forcing all the elements in each diagonal to a single value, based upon at least one of the values in each diagonal.

The advantage of this technique is that the simplified matrix allows the use of the efficient Levinson-Durbin recursion, which is much less complex than Cholesky decomposition.

In one embodiment, all values in the diagonals of the matrix may be forced to the values in the first column. Thus, a matrix $\underline{\bar{V}}$ is formed by replicating the first element along each diagonal of matrix $V=[G^H G]$ such that:

$$\bar{v}_{n+m,n} = v_{m+1,1} \qquad n = 1 \cdots W \qquad m = 0 \cdots W - n$$

$$\bar{v}_{n,n+m} = v_{1,m+1} \qquad n = 1 \cdots W \qquad m = 0 \cdots W - n$$

where $v_{i,j}$ is the element of $V$ on the $i$th row and $j$th column.

A principal advantage of this technique is that only $W$ out of the $W(W+1)/2$ independent elements of $V=[G^H G]$ need to be evaluated. Other variants of the technique replicating the ith (rather than the first) element along each diagonal are possible.

In another embodiment, matrix $\underline{\bar{V}}$ is formed by averaging elements along each diagonal of matrix $V=[G^H G]$ such that:

$$\bar{v}_{n+m,n} = \frac{1}{W-m} \sum_{i=1}^{W-m} v_{i+m,i} \qquad n = 1 \cdots W \qquad m = 0 \cdots W - n$$

$$\tilde{v}_{n,\,n+m} = \frac{1}{W-m} \sum_{i=1}^{W-m} v_{i,\,i+m} \qquad n = 1 \cdots W \qquad m = 0 \cdots W - n$$

A disadvantage of this technique is that the computation of the averages for the Toeplitz matrix will require some additional computation. This would however be more than compensated due to the savings provided by the efficient Levinson-Durbin recursion.

The generation of a matrix $\tilde{V}$ according to the above approximations greatly simplifies the calculation of the least squares channel estimate $\underline{h}_2$.

Although in the above-described example the principles of the invention have been described with reference to a GSM application, the invention could be utilised in a CDMA or other wireless system to an equally advantageous effect.

**Claims**

1. A method of approximating the result of the multiplication of a truncated convolution matrix by its transpose, comprising the steps of: determining at least one value in each diagonal of the matrix; and setting all values in each diagonal in dependence on the at least one value to thereby create an approximated matrix product.

2. The method of claim 1 wherein the step of determining at least one value in each diagonal of the matrix comprises selecting a column of the matrix, and determining the at least one value in each diagonal in dependence on the values in the selected column.

3. The method of claim 2 wherein the first column of the matrix is selected.

4. The method of claim 1 wherein the step of determining at least one value in each diagonal of the matrix comprises calculating the average of all values in each diagonal, and setting all values in each diagonal to the respective average value.

5. A method of determining the least squares value of a vector comprising: approximating the result of the multiplication of the truncated convolution matrix by its transpose according to any one of claims 1 to 4; and inverting the resultant matrix.

6. A method of determining a channel estimate in a mobile communications system including the approximation technique of any one of claims 1 to 5.

7. The method of claim 6, comprising the steps of: correlating a received signal with a predetermined sequence of bits thereby generating a first set of correlation values; generating a first channel estimate in dependence on the first set of correlation values; using the first channel estimate to derive a long sequence of estimated symbols; correlating the received signal with the long sequence of estimated symbols, thereby generating a second set of correlation values, and generating a second channel estimate in dependence on the second set of correlation values, wherein the second set of correlation value is based on a truncated convolution matrix.

# FIG. 1

POWER RAMPING

148 BITS

EP 1 059 784 A1

## FIG. 2

RECEIVED SIGNAL
2

CHANNEL ESTIMATOR
5
4

TRAINING SEQUENCE

EQUALISER
14
6

CHANNEL ESTIMATOR
16
8

EQUALISER
18
10

12

## FIG. 3

2

CORRELATOR
20

26

LEAST SQUARE VALUE CALCULATOR
22

18

16

8

# EP 1 059 784 A1

<table>
<tr><td>European Patent<br>Office</td><td><b>EUROPEAN SEARCH REPORT</b></td><td>Application Number<br>EP 99 30 4585</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KARIMI H R ET AL: "A novel and efficient solution to block-based joint-detection using approximate Cholesky factorization" NINTH IEEE INTERNATIONAL SYMPOSIUM ON PERSONAL, INDOOR AND MOBILE RADIO COMMUNICATIONS (CAT. NO.98TH8361), PROCEEDINGS OF NINTH INTERNATIONAL SYMPOSIUM ON PERSONAL, INDOOR, AND MOBILE RADIO COMMUNICATIONS (PIMRC'98), BOSTON, MA, USA, 8-11 SEPT. 1998, pages 1340-1345 vol.3, XP002122047 1998, New York, NY, USA, IEEE, USA ISBN: 0-7803-4872-9 | 1-3,5,6 | H04L25/02 G06F17/16 |
| A | * abstract * <br> * section I * <br> * section iV * | 4,7 | |
| A | CHANG K -H ET AL: "ITERATIVE JOINT SEQUENCE AND CHANNEL ESTIMATION FOR FAST TIME-VARYING INTERSYMBOL INTERFERENCE CHANNELS" PROCEEDINGS OF THE INTERNATIONAL CONFERENCE ON COMMUNICATIONS (ICC),US,NEW YORK, IEEE, page 357-361 XP000533010 ISBN: 0-7803-2487-0 * abstract * * page 358, right-hand column, last paragraph - page 359, right-hand column, paragraph 1 * <br> --- <br> -/-- | 7 | TECHNICAL FIELDS SEARCHED (Int.Cl.7) <br><br> H04L G06F |

The present search report has been drawn up for all claims

| Place of search | Date of completion of the search | Examiner |
|---|---|---|
| THE HAGUE | 9 November 1999 | Langinieux, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent Office

Application Number

EP 99 30 4585

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SANDELL M ET AL: "ITERATIVE CHANNEL ESTIMATION USING SOFT DECISION FEEDBACK" IEEE GLOBAL TELECOMMUNICATIONS CONFERENCE,US,NEW YORK, NY: IEEE, page 3728-3733 XP000805320 ISBN: 0-7803-4985-7<br>* abstract *<br>* page 1, left-hand column, last paragraph *<br>* page 1, right-hand column, last paragraph *<br>* figures 1,2 * | 7 | |
| T | HENKEL W: "AN EXTENSION OF THE LEVINSON-DURBIN ALGORITHM FOR THE INVERSION OF TOEPLITZ MATRICES" ARCHIV FUR ELEKTRONIK UND UBERTRAGUNGSTECHNIK,DE,S.HIRZEL VERLAG. STUTTGART, vol. 44, no. 5, page 429-431 XP000170635 ISSN: 0001-1096<br>* the whole document * | 1 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 9 November 1999 | Langinieux, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)